# EUROPEAN PATENT APPLICATION

(11) **EP 1 257 125 A2**
(43) Date of publication of application: **13.11.2002**
(21) Application number: 02253183.4
(22) Date of filing: 07.05.2002
(51) Int. Cl.: H04N 7/10, H04N 7/18

(54) **Network imaging**

(30) Priority: 09.05.2001 GB 0111414
(71) Applicant: Rees, Ian Paul, Weybridge, Surrey KT15 1DP (GB)
(72) Inventor: Rees, Ian Paul, Weybridge, Surrey KT15 1DP (GB)
(74) Representative: Butler, Lance

(57) **Abstract**

A system for connecting a controlling station (10) to a viewing station (13) in accordance with CAT 5/6 protocol comprises a single conductor (30) which carries audio and video signals.

## Description

This invention relates to network imaging.

Generally, cabling for supplying audio/ video signals selectively and simultaneously to a plurality of video screens is effected through audio/video matrix switches using a plethora of individual cables, these cables being video cables, audio cables and power cables for each screen. This arrangement is undesirable in terms of cost and on aesthetic grounds but also presents a potential electrical hazard on some equipment, for example in gymnasiums where individual power supplies for television monitors employing thin film technology (TFT) a hazardous situation could arise.

It is desirable to provide a system for connecting to a controlling station a plurality of video screens for providing simultaneously audio/ video reception in which fewer cables are utilised than hitherto, thereby reducing the cabling requirements, or increasing the number of viewing channels available for the eight twin cable system.

According to the present invention, there is provided a system for connecting a controlling station to a viewing station in accordance with CAT 5/6 protocol wherein a single cable carries video, audio, power and control.

It is desirable to provide all the relevant signals and power through one Category 5/6 cable which is particularly advantageous since it is the standard network cable internationally. This cable consists of four twisted pair cables each being capable of being utilised for individual purposes as follows: one pair for power, one pair for stereo, one pair for video, and one pair for control.

The system may also include a personal receiver for example gymnasiums providing channel selection, volume control and through power to a television monitor, for example a thin film technology (TFT) television monitor. The personal receiver is activated once the headphones are connected, for example through the agency of a jack plug. Advertisements and messages can be displayed *via* the LCD channel indicator.

Following is a description, by way of example only and with reference to the accompanying drawings, of one method of carrying the invention into effect.

In the drawings:-
**Figure 1** is a diagrammatic representation of one embodiment of a system in accordance with the present invention, and
**Figure 2** is a diagrammatic representation of another embodiment of a system in accordance with the present invention.

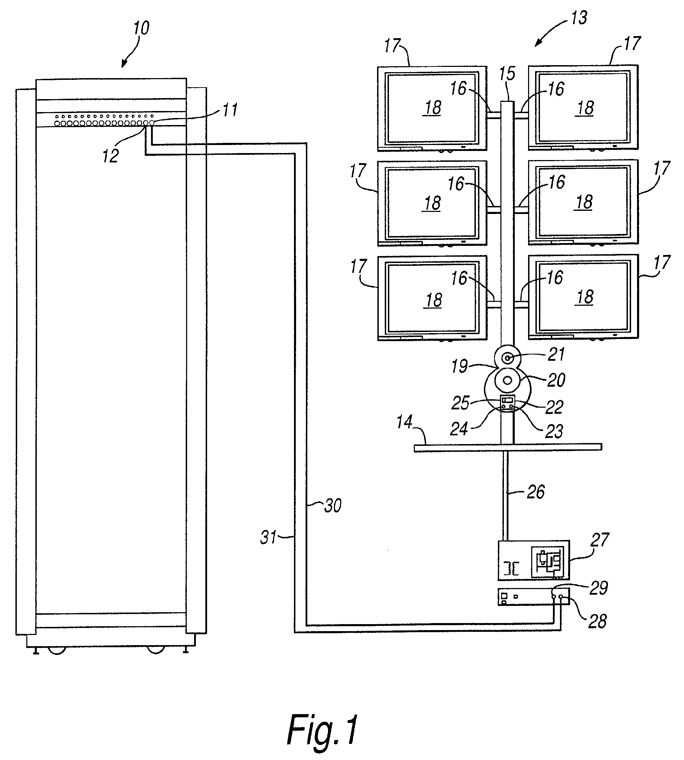

Referring now to Figure 1 of the drawings, there is shown a diagrammatic representation of one embodiment of a system in accordance with the present invention comprising a controlling station 10 having a plurality of terminals, two of which are shown at 11 and 12.

The system also includes a stand 13 comprising a base 14 and a post 15 upstanding from the base 14. The post 15 is provided with six brackets 16 extending in two groups of three from opposite sides of a longitudinal axis of the post 15, each of the brackets carrying a rectangular support 17 having mounted thereon a corresponding one of six thin film technology (TFT) video screens 18. The post 15 is provided with a housing 19 located below the array of screens 18, the housing 19 containing a speaker 20, an on/off switch 21 and a control panel 22. The control panel 22 includes a volume control 23, a channel selector 24 and a channel select indicating device 25.

The screens 18 are connected by cabling 26 to a control box 27 which includes terminals 28 and 29. The terminals 28, 29 are connected to the terminals 11 and 12 of the controlling station 10 by conductors 30 and 31.

The arrangement is such that six video signals, each for supplying simultaneously a corresponding one of the six screens 18, and one audio signal are supplied to the control box 27 in accordance with CAT 5 protocol, the signals being transmitted via the conductor 30. The audio signal is such as to correspond with any one of the video signals which is selected by operation of the channel selector 24. Operation of the channel selector 24 results in signals being transmitted via conductors 31 and 30 to control the controlling station 10 to change the audio signal to that corresponding to the selected channel.

It will be appreciated, therefore, that the system in accordance with the embodiment shown in Figure 1 provides for more screens 18 than was considered possible hitherto using the CAT 5 protocol because only one audio signal is transmitted at any time, this being the audio signal which corresponds with a selected one of the video signals which are transmitted continuously.

It will also be appreciated that the post 15 may be adapted to be of modular configuration so that one or less than six screens 18 may be utilised. Such a modular configuration may be achieved by arranging for the brackets 16 carrying the rectangular supports 17 to be removably connectable with the post 15.

The embodiment is of particular advantage to trading establishments in which it is important to monitor a plurality of different viewing channels simultaneously.

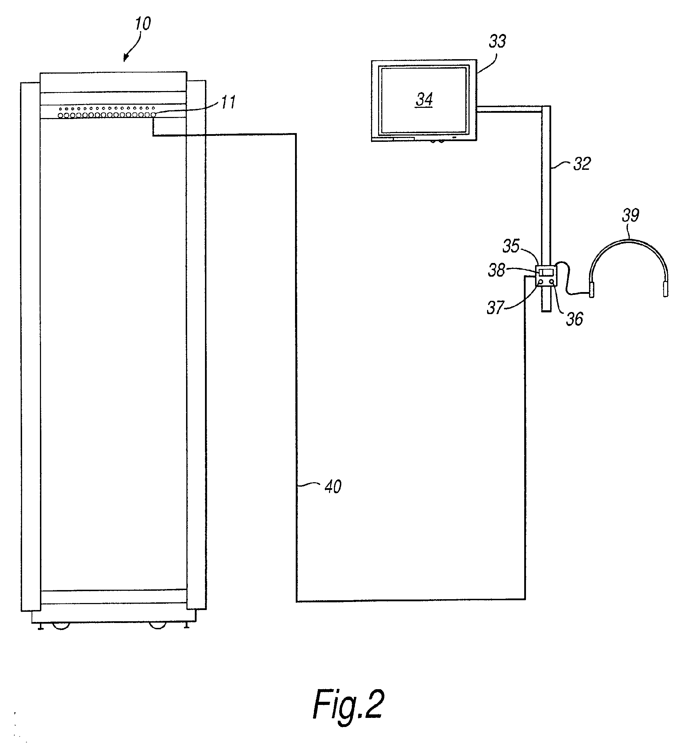

Referring now to Figure 2 of the drawings, there is shown a diagrammatic representation of another embodiment of a system in accordance with the present invention comprising the same controlling station 10 as shown in Figure 1 having the terminal 11.

The system also includes a stand 32 which is adapted to be mounted on exercise apparatus (not shown). The stand 32 includes a rectangular portion 33 which carries a screen 34. A lower portion of the stand 32 is provided with a housing 35 which includes an on/off switch and volume control 36, a channel select 37 and a channel select indicator 38. The housing is adapted to receive a jack plug for connecting headphones 39. The on/off switch and volume control 36, the channel select 37, the channel select indicator 38 and a socket (not shown) for receiving the jack plug are included in a circuit (not shown) which also includes a terminal (not shown) which receives one end of a conductor 40 the remote end of which is received in the terminal 11 of the controlling station 10. In an alternative embodiment the insertion of the jack plug automatically actuates the on/off switch.

The arrangement is such that audio signals for the headphones 39, a video signal for the screen 34, and a voltage is established via the conductor 40 in accordance with the CAT 5 protocol, there being sufficient capacity for the channel select 37 to switch from one channel, including a video channel, to another.

It will be appreciated that the system shown in Figure 2 provides a facility whereby power is supplied to the screen 34 such that a plurality of exercise machines in a gymnasium may each to be provided with video images on a corresponding screen 34 with accompanying audio signals. With this facility, it is no longer a necessity to provide a single screen for a gymnasium with the resultant discomfort and possible undesirable strain on the part of persons using the exercise equipment who may wish to view the images displayed on the screen.

## Claims

1. A system for connecting a controlling station (10) to a viewing station (13) in accordance with CAT 5/6 protocol **characterised by** a single cable (30, 40) carrying video, audio, power and control.

2. A system according to Claim 1 **characterised in that** the single cable (30, 40) carries the video, audio, power and control to a television monitor (18).

3. A system according to Claim 2 **characterised in that** the television monitor (18) is a thin film technology monitor.

4. A system according to any one of the preceding claims **characterised in that** the system includes a personal receiver (39) including channel selection, volume control, power on/off and control.

5. A system according to any one of the preceding claims **characterised in that** the power is directed to a television monitor (18).

6. A system according to Claim 5 **characterised in that** the television monitor (18) is a thin film technology television monitor.

7. A system as claimed in Claim 1 **characterised in that** a second conductor is included to provide a switching facility.

8. A system as claimed in any one of the preceding claims **characterised in that** the viewing station includes a plurality of video screens (18).

9. A system as claimed in Claim 8 **characterised in that** the screens (18) are mounted on a stand (13).

10. A system as claimed in Claim 9 **characterised in that** the stand (13) comprises a plurality of modular components (15, 16, 17), each carrying at least one screen (18), the modular components being removably connectable one to another and to a base component (14).
